# EUROPÄISCHE PATENTANMELDUNG

(11) **EP 2 474 792 A2**
(43) Veröffentlichungstag der Anmeldung: **11.07.2012**
(21) Anmeldenummer: 12000108.6
(22) Anmeldetag: 10.01.2012
(51) Int. Cl.: F24H 1/00, F24H 1/18, F24H 1/26, F24H 9/00, F24B 1/02

(54) **Wasserführender Heizkessel, Pufferspeicher und Verfahren zur Herstellung eines wasserführenden Wandelements**

(30) Priorität: 10.01.2011 DE 102011008221
(71) Anmelder: HET - Heiz- und Energietechnik Entwicklungs GmbH, 5201 Seekirchen am Wallersee (AT)
(72) Erfinder: Bauer, Thomas, 5020 Salzburg (AT)
(74) Vertreter: Samson & Partner

(57) **Zusammenfassung**

Die Erfindung betrifft einen wasserführenden Heizkessel, insbesondere Biomasseheizkessel wie Pelletheizkessel, Scheitholzheizkessel und/oder Holzvergaserheizkessel, der aufweist:
einen Feuerraum (16); und
wenigstens einen wasserführenden Wandabschnitt (10, 11, 12, 20, 21), der den Feuerraum (16) wenigstens teilweise umgibt, wobei
der wenigstens eine wasserführende Wandabschnitt (10, 11, 12, 20, 21) eine Außenwand (10a, 11a, 12a, 20a, 21a), eine Innenwand (10b, 11b, 12b, 20b, 21b) und wenigstens ein Verstärkungselement (14a-e) aufweist;
das wenigstens eine Verstärkungselement (14a-e) zwischen der Außenwand (10a, 11 a, 12a, 20a, 21a) und der Innenwand (10b, 11b, 12b, 20b, 21b) angeordnet ist und wenigstens eine Durchbrechung (22a-e) aufweist, durch die Wasser strömen kann;
der wenigstens eine wasserführende Wandabschnitt (10, 11, 12, 20, 21), die Außenwand (10a, 11a, 12a, 20a, 21a), die Innenwand (10b, 11b, 12b, 20b, 21b) und das wenigstens eine Verstärkungselement (14a-e) wenigstens teilweise aus Metall sind; und
das wenigstens eine Verstärkungselement (14a-e) mittels Laserschweißen von außen durch die Außenwand (10a, 11a, 12a, 20a, 21a) und/oder von außen durch die Innenwand (10b, 11b, 12b, 20b, 21b) des Wandabschnitts (10, 11, 12, 20, 21) hindurch jeweils mit der Innenseite der Außenwand (10a, 11a, 12a, 20a, 21a) und/oder der Innenseite der Innenwand (10b, 11b, 12b, 20b, 21b) wenigstens teilweise verschweißt ist.

## Beschreibung

Die vorliegende Erfindung bezieht sich allgemein einen wasserführenden Heizkessel, einen Pufferspeicher und ein Verfahren zum Herstellen eines Wandelements für einen Heizkessel bzw. einen Pufferspeicher und insbesondere auf einen wasserführenden Heizkessel, einen Pufferspeicher und Verfahren zur Herstellung eines wasserführenden Wandelements unter Verwendung von Laserschweißen.

### HINTERGRUND DER ERFINDUNG

Es sind allgemein wasserführende Heizkessel bekannt, bei denen Biomasse, wie Holz, Hackschnitzelgut, Pellets oder dergleichen verbrannt wird, um Wasser zu erwärmen. Das erwärmte Wasser wird typischerweise zur Heizung und Warmwasserbereitung verwendet. Typische Heizkessel, die für die Verbrennung von Pellets geeignet sind und bspw. einen Holzvergasungsprozess für die Verbrennung verwenden, sind hohen Drücken ausgesetzt. Dementsprechend stabil sind die Wandungen der Heizkessel gebaut, was diese schwer und damit unhandlich macht.

Außerdem sind Pufferspeicher bekannt, die typischerweise zylinderförmig ausgestaltet sind. Aufgrund der runden Form benötigen sie viel Platz, insbesondere viel Stellfläche.

Sowohl bei wasserführenden Heizkesseln als auch bei Pufferspeicher ist es üblich, Blechnahtstellen mit einem Zusatzwerkstoff zu verschweißen.

Aufgabe der vorliegenden Erfindung ist es einen verbesserten wasserführenden Heizkessel, einen verbesserten Pufferspeicher und ein verbessertes Verfahren zur Herstellung eines Wandelements für einen wasserführenden Heizkessel bzw. für einen Pufferspeicher zur Verfügung zu stellen.

### ZUSAMMENFASSUNG DER ERFINDUNG

Nach einem ersten Aspekt stellt die vorliegende Erfindung einen wasserführenden Heizkessel, insbesondere Biomasseheizkessel wie Pelletheizkessel, Scheitholzheizkessel und/oder Holzvergaserheizkessel, bereit, umfassend: einen Feuerraum; und wenigstens einen wasserführenden Wandabschnitt, der den Feuerraum wenigstens teilweise umgibt, wobei der wenigstens eine wasserführende Wandabschnitt eine Außenwand, eine Innenwand und wenigstens ein Verstärkungselement aufweist. Das wenigstens eine Verstärkungselement ist zwischen der Außenwand und der Innenwand angeordnet und weist wenigstens eine Durchbrechung auf, durch die Wasser strömen kann. Der wenigstens eine wasserführende Wandabschnitt, die Außenwand, die Innenwand und das wenigstens eine Verstärkungselement sind wenigstens teilweise aus Metall. Das wenigstens eine Verstärkungselement ist mittels Laserschweißen von außen durch die Außenwand und/oder von außen durch die Innenwand des Wandabschnitts hindurch jeweils mit der Innenseite der Außenwand und/oder der Innenseite der Innenwand wenigstens teilweise verschweißt.

Nach einem zweiten Aspekt stellt die vorliegende Erfindung einen Pufferspeicher zum Speichern von Wasser bereit, wobei der Pufferspeicher dazu eingerichtet ist, in einem Heizsystem zur Speicherung von Warmwasser angeordnet zu werden. Der Pufferspeicher umfasst: wenigstens zwei gegenüberliegende Wandabschnitte zwischen denen wenigstens ein Verstärkungselement angeordnet ist, das mehrere Durchbrechungen aufweist, durch die Wasser strömen kann. Das wenigstens eine Verstärkungselement ist mittels Laserschweißen von außen durch die gegenüberliegenden Wandabschnitte hindurch mit jeweils der Innenseite des entsprechenden Wandabschnitts wenigstens teilweise verschweißt.

Nach einem dritten Aspekt stellt die vorliegende Erfindung ein Verfahren zum Herstellen eines wasserführenden Wandelements bereit, insbesondere eines wasserführenden Wandelementes für einen wasserführenden Heizkessel nach dem ersten Aspekt bzw. einen Pufferspeicher nach dem zweiten Aspekt. Das Wandelement weist wenigstens zwei gegenüberliegende Außenwandelemente auf. Das Verfahren umfasst die Schritte: Anordnen wenigstens eines Außenwandelements; Anordnen wenigstens eines Verstärkungselements auf der Innenseite des Außenwandelement; und Laserschweißen durch die Außenseite des Außenwandelements hindurch, um das Verstärkungselement mit der Innenseite des Außenwandelements zu verschweißen.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsbeispiele.

### KURZBESCHREIBUNG DER ZEICHNUNG

Ausführungsbeispiele der Erfindung werden nun beispielhaft und unter Bezugnahme auf die beigefügte Zeichnung beschreiben, in der:
Fig. 1 ein Ausführungsbeispiel eines wasserführenden Heizkessels in Übereinstimmung mit der vorliegenden Erfindung in einer dreidimensionalen Außenansicht veranschaulicht;
Fig. 2 den wasserführenden Heizkessel von Fig. 1 in einer dreidimensionalen vertikalen Schnittansicht veranschaulicht, in der wasserführende Wandabschnitte mit Verstärkungselementen veranschaulicht sind;
Fig. 3 den wasserführenden Heizkessel von Fig. 1 in einer weiteren dreidimensionalen vertikalen Schnittansicht veranschaulicht, in der wasserführende Wandabschnitte mit Verstärkungselementen veranschaulicht sind;
Fig. 4 den wasserführenden Heizkessel von Fig. 1 in einer dreidimensionalen horizontalen Schnittansicht veranschaulicht, in der wasserführende Wandabschnitte mit Verstärkungselementen veranschaulicht sind;
Fig. 5 den wasserführenden Heizkessel von Fig. 1 in einer dreidimensionalen schrägen vertikalen Schnittansicht veranschaulicht, in der wasserführende Wandabschnitte mit Verstärkungselementen veranschaulicht sind;
Fig. 6 einen wasserführenden Wandabschnitt mit Verstärkungselementen des Heizkessels von Fig. 1 veranschaulicht;
Fig. 7 den wasserführenden Wandabschnitt von Fig. 6 in einer Schnittansicht veranschaulicht;
Fig. 8 eine erste rechtwinklige Verbindung zweier Wandabschnitte des Heizkessels von Fig. 1 in einer Querschnittansicht veranschaulicht;
Fig. 9 eine zweite rechtwinklige Verbindung zweier Wandabschnitte des Heizkessels von Fig. 1 in einer Querschnittansicht veranschaulicht;
Fig. 10 ein Ausführungsbeispiel eines Pufferspeichers in Übereinstimmung mit der vorliegenden Erfindung in einer dreidimensionalen Außenansicht veranschaulicht;
Fig. 11a den Pufferspeicher von Fig. 10 in einer zweidimensionalen Ansicht darstellt;
Fig. 11b den Pufferspeicher von Fig. 10 entlang einer vertikalen Schnittlinie A-A zeigt;
Fig. 11c den Pufferspeicher von Fig. 10 entlang einer horizontalen Schnittlinie B-B zeigt;
Fig. 12 den Pufferspeicher von Fig. 10 in einer dreidimensionalen vertikalen Schnittansicht veranschaulicht, in der Verstärkungselemente sichtbar sind;
Fig. 13 den Pufferspeicher von Fig. 10 in einer weiteren dreidimensionalen vertikalen Schnittansicht veranschaulicht, in der die Verstärkungselemente sichtbar sind;
Fig. 14 einen Herstellungsvorgang eines wasserführenden Wandelements mit Verstärkungselementen veranschaulicht, bei dem die Verstärkungselemente mittels Laserschweißen von außen verschweißt werden; und
Fig. 15 die Herstellung eines rechtwinkeligen wasserführenden Wandelements veranschaulicht.

### BESCHREIBUNG DER BEVORZUGTEN AUSFÜHRUNGSBEISPIELE

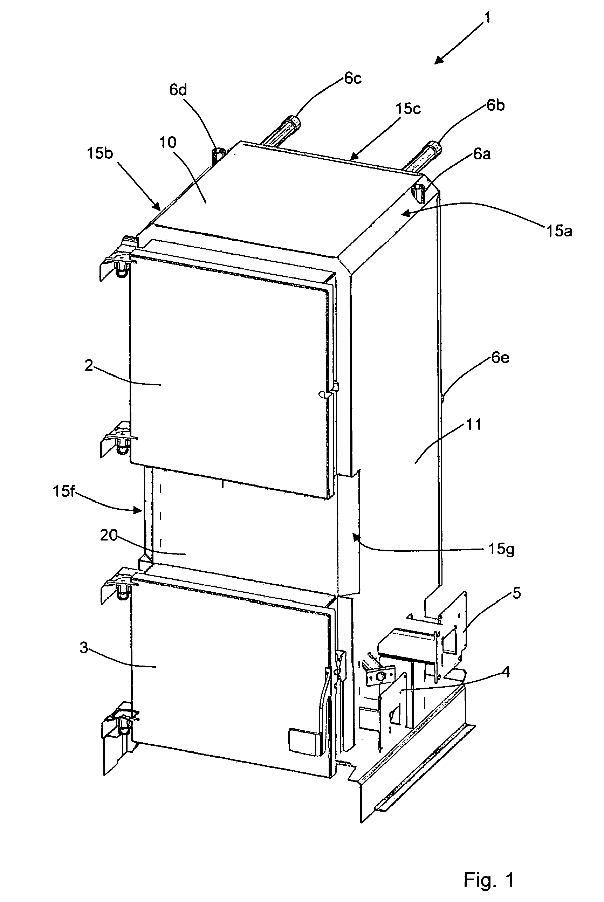

In Fig. 1 ist ein Ausführungsbeispiel eines wasserführenden Heizkessels in Übereinstimmung mit der vorliegenden Erfindung veranschaulicht. Vor einer detaillierten Beschreibung folgen zunächst allgemeine Erläuterungen zu den Ausführungsbeispielen und deren Vorteile.

Wie eingangs erwähnt, sind allgemein wasserführende Heizkessel bekannt, bei denen Biomasse, wie Holz, Hackschnitzelgut, Pellets oder dergleichen verbrannt wird, um Wasser zu erwärmen. Das erwärmte Wasser wird typischerweise zur Heizung und Warmwasserbereitung verwendet. Wasserführende Heizkessel, die für die Verbrennung von Pellets geeignet sind und bspw. einen Holzvergasungsprozess für die Verbrennung verwenden, sind hohen Drücken ausgesetzt. Dementsprechend stabil sind die Wandungen der Heizkessel gebaut, was diese schwer und damit unhandlich macht.

Bei Holzvergaserkesseln entstehen bspw. Betriebsdrücke von 3 bar und für die Zulassung müssen derartige Kessel einem Druck von 6 bar im Produktionstest standhalten.

Insbesondere Holzvergaserkessel sind deshalb typischerweise aus dicken Blechen mit einer Wandstärke von 5 mm bis 8 mm gebaut. Solche dicken Wandungen führen aber zu einem hohen Gesamtgewicht des Holzvergaserkessels, das bspw. 500 kg bis 600 kg betragen kann. Ein Holzvergaserkessel mit einem derart hohen Gewicht von 500 kg bis 600 kg ist allerdings unter Umständen schwer transportierbar, da er bspw. mit zwei Personen kaum zu tragen ist. Außerdem ist bei manchen Häusern, insbesondere Wohnhäusern, die Heizung im Keller vorgesehen und der Keller ist nur oftmals über eine schmale Treppe zugänglich. Bei solchen Fällen kann der Transport eines 500 kg schweren Holzvergaserkessels in den Heizungskellerraum schwer realisierbar sein, da bspw. nicht mehr als zwei Personen gleichzeitig auf der Treppe an dem Holzvergaserkessel angreifen können.

Außerdem sind Pufferspeicher zum Speichern von Warmwasser in einem Heizsystem bekannt, die typischerweise zylinderförmig ausgestaltet sind. Aufgrund der runden Form benötigen sie viel Platz. Dies stellt insbesondere bei Häusern mit wenig Wohn-/Nutzfläche eine Platzverschwendung dar. Aufgrund der runden Form können Pufferspeicher auch nicht platzsparend, bspw. direkt an der Wand oder in der Ecke eines Raumes aufgestellt werden.

Sowohl bei wasserführenden Heizkesseln als auch bei Pufferspeichern ist es üblich, Blechnahtstellen mit einem Zusatzwerkstoff zu verschweißen. Da das Verschweißen mit Zusatzwerkstoff aufwändig ist, wird sowohl bei wasserführenden Heizkesseln als auch bei Pufferspeichern darauf geachtet, möglichst wenige Schweißnähte vorzusehen.

Aus diesem Grund sind bspw. Pufferspeicher als Zylinder ausgestaltet, da diese Form möglichst wenige Schweißnähte und keine Versteifungselemente benötigt. Aus einem ähnlichen Grund sind auch die bekannten wasserführenden Heizkessel mit einem dicken Blech ausgestaltet, um möglichst die Zahl der Schweißnähte gering zu halten.

Der Erfinder hat nun erkannt, dass durch die Kombination von Dünnblech mit Verstärkungselemente, die mit der relativ aufwändigen Laserschweißtechnik verschweißt werden, ein wasserführender Leichtbauheizkessel sowie ein Pufferspeicher, der nicht zylinderförmig ist, rentabel realisiert werden können. Ein solcher Leichtbauheizkessel wiegt bspw. nur 200 kg ist damit bedeutend leichter als der bekannte Heizbaukessel aus dickem Blech, der wie oben erwähnt ein Gewicht von bspw. 500 kg bis 600 kg haben kann.

Grundsätzlich könnte man daran denken, bekannte Heizkessel bzw. Pufferspeicher in Dünnblechbauweise mit Verstärkungselementen zu realisieren, die mit einer herkömmlichen Schweißtechnik verschweißt werden bei der Zusatzwerkstoffe verwendet werden. Allerdings ist, wie bereits angedeutet, die Schweißtechnik mit Zusatzwerkstoff insofern aufwändig, da die zu schweißende Nahtstelle immer direkt zugänglich sein muss. Bei dieser Schweißtechnik verbindet der Zusatzwerkstoff zwei an einer Nahtstelle aneinanderstoßende Teile. Ist die Nahtstelle also nicht direkt zugänglich, so ist es bspw. üblich, einen entsprechenden Ausschnitt vorzusehen, durch den hindurch geschweißt werden kann. Allerdings bedeutet dies bei wasserführenden Teilen, dass durch das Schweißen auch der Ausschnitt so zugeschweißt werden muss, dass er wasserdicht ist. Daher ist es auch nicht bekannt, wasserführende Heizkessel oder Pufferspeicher aus Dünnblechen herzustellen, da dies mit der auf diesem technischen Gebiet üblichen Schweißtechnik nur mit erhöhtem technischen Aufwand und erhöhten Kosten möglich wäre.

Im Gegensatz dazu ermöglicht die Laserschweißtechnik ein Schweißen ohne Zusatzwerkstoff und durch ein Material hindurch. Dementsprechend ist es bspw. nicht notwendig einen Ausschnitt vorzusehen, wenn eine Nahtstellt nicht oder nur schlecht zugänglich ist. Dafür ist die Laserschweißtechnik relativ aufwändig und mit hohen Kosten verbunden. Der Erfinder hat erkannt, dass durch die Kombination von Dünnblechen, bspw. mit einer Wandstärke zwischen 1 mm und 2 mm, von Verstärkungselementen und Laserschweißen ein wasserführender Heizkessel bzw. ein Pufferspeicher mit einer Rentabilität und einer Stabilität hergestellt werden können, die ähnlich zu der von bekannten Heizkesseln und Pufferspeichern sind, die aus entsprechend dicken Blechen hergestellt sind.

In den Ausführungsbeispielen wird ein wasserführender Heizkessel, insbesondere ein Biomasseheizkessel, wie bspw. ein Pelletheizkessel, Scheitholzheizkessel und/oder Holzvergaserheizkessel, mittels Laserschweißen hergestellt. Der wasserführende Heizkessel umfasst einen Feuerraum, in dem Biomasse verbrannt bzw. zu Holzgas umgewandelt wird. Als Biomasse kommen, wie oben erwähnt, alle organischen Materialien in Betracht, die für die Verfeuerung in einem Heizkessel geeignet sind, wie bspw. Holz. Insbesondere wird im Folgenden aber auf einen Holzvergaserkessel Bezug genommen, der bspw. Pellets oder Scheitholz vergast und/oder verbrennt, ohne, dass die vorliegende Erfindung auf derartige Ausführungsbeispiele beschränkt wäre.

Der wasserführende Heizkessel weist wenigstens einen wasserführenden Wandabschnitt auf, der den Feuerraum wenigstens teilweise umgibt. Typischerweise ist der Feuerraum bei manchen Ausführungsbeispielen an vier Seiten von miteinander kommunizierend verbundenen wasserführenden Wandabschnitten verbunden, nämlich an der Oberseite, Rückseite und jeweils an der linken und rechten Seite. An der Vorderseite befindet sich bei manchen Ausführungsbeispielen eine Feuerraumtür, durch die der Feuerraum mit zu verbrennender Biomasse, bspw. Scheitholz, bestückt werden kann.

Der wenigstens eine wasserführende Wandabschnitt weist eine Außenwand, eine Innenwand und wenigstens ein Verstärkungselement auf. Das wenigstens eine Verstärkungselement ist zwischen der Außenwand und der Innenwand angeordnet, um sowohl die Außenwand als auch die Innenwand zu verstärken. Das heißt das Verstärkungselement erstreckt so von der Innenwand zur Außenwand bzw. umgekehrt von der Außenwand zur Innenwand und verbindet beide miteinander. Durch den Abstand und den dadurch zwischen der Außenwand und der Innenwand entstehenden Hohlraum, der durch das Verstärkungselement bestimmt wird, kann zu erwärmendes Wasser fließen. Dazu weist das Verstärkungselement wenigstens eine Durchbrechung auf, durch die Wasser strömen kann.

Der wasserführende Wandabschnitt, die Außenwand, die Innenwand und das wenigstens eine Verstärkungselement sind wenigstens teilweise aus Metall. Bei manchen Ausführungsbeispielen sind bspw. die Außenwand und die Innenwand aus Dünnblech hergestellt.

Insbesondere weist bei manchen Ausführungsbeispielen die Außenwand und die Innenwand jeweils eine Wandstärke auf, die kleiner als 5 mm ist und insbesondere kleiner als 2 mm ist. Dabei ist bei manchen Ausführungsbeispielen die Außenwand und/oder die Innenwand aus Dünnblech mit der Wandstärke kleiner als 5 mm bzw. kleiner als 2 mm hergestellt.

Bei manchen Ausführungsbeispielen weist die Innenwand Edelstahl auf und die Außenwand (gehärteten) Stahl, zum Beispiel ST52, auf. Das Verstärkungselement kann bspw. aus Schwarzblech oder auch aus (Edel-)Stahl gefertigt sein.

Das wenigstens eine Verstärkungselement ist mittels Laserschweißen von außen durch die Außenwand und/oder von außen durch die Innenwand des Wandabschnitts hindurch mit jeweils der Innenseite der Außenwand und/oder der Innenseite der Innenwand wenigstens teilweise verschweißt. Dabei erfolgt das Laserschweißen durch das Material der Außenwand bzw. der Innenwand hindurch. Es ist also kein Ausschnitt oder dergleichen an der Schweißstelle vorgesehen.

Wie oben bereits angedeutet, bildet der Wandabschnitt eine Art Sandwichstruktur aus Außenwand, Verstärkungselement und Innenwand. Die Innenwand bildet dabei einen Teil des Innenraums des Feuerraums, während die Außenwand einen Teil der Außenseite des Feuerraums bzw. der Biomassefeuerung bildet.

Dabei hat die Außenwand einen Außenseite und einen Innenseite. Die Außenseite der Außenwand bildet dabei auch die Außenseite des Kessels bzw. der Biomassefeuerung. Die Innenseite der Außenwand ist innerhalb der Sandwichstruktur aus Außenwand und Innenwand und steht dabei in Kontakt mit dem Verstärkungselement und dem Wasser, dass in dem Wandabschnitt fließt.

Die Innenwand hat ebenfalls eine Außenseite und eine Innenseite. Die Außenseite der Innenwand bildet die innere Seite des Feuerraums und kommt bspw. mit der Flamme im Feuerraum in Berührung und muss dementsprechend höheren Temperaturen standhalten. Die Innenseite der Innenwand ist wiederum im Inneren der Sandwichstruktur des Wandabschnitts und ist in Kontakt mit dem Verstärkungselement und dem Wasser, das durch den Wandabschnitt fließt.

Die beiden Innenseiten der Außenwand und der Innenwand liegen folglich einander gegenüber und sind im Wesentlichen parallel zueinander angeordnet.

Der Wandabschnitt aus Außenwand und Innenwand bildet bei manchen Ausführungsbeispielen eine kastenartige Wand mit einem Hohlraum in dem das bzw. die Verstärkungselemente angeordnet sind und in dem auch das Wasser fließt.

Das Verstärkungselement weist bei manchen Ausführungsbeispielen zwei gegenüberliegende ebene Abschnitte bzw. Befestigungsabschnitte auf, die sich jeweils an einer Innenseite der Außenwand bzw. der Innenwand erstrecken und an denen das Verstärkungselement wenigstes teilweise mittels Laserschweißen von außen durch die Außenwand bzw. die Innenwand verschweißt ist. Die ebenen Abschnitte müssen dabei nicht direkt gegenüberliegen, sondern können auch schräg gegenüberliegend angeordnet sein. Die gegenüberliegenden Abschnitte sind durch einen mittleren Abschnitt des Verstärkungselements miteinander verbunden. Dadurch verbindet das Verstärkungselement die Außenwand mit der Innenwand und kann bspw. verhindern, dass sich das dünne Blech der Außenwand bzw. der Innenwand durch den hohen Druck, der auf den Wandabschnitt wirkt, verbiegt.

Der hohe Druck wird dabei durch das Wasser, das durch den Wandabschnitt fließt erzeugt. Der Wasserdruck wirkt dabei gleichmäßig von Innen jeweils auf die Außenwand und die Innenwand und drückt die Außenwand und Innenwand auseinander. Dieser Druck wird durch das Verstärkungselement aufgenommen, da es die Außenwand und die Innenwand miteinander verbindet und somit dem Auseinanderdrücken entgegenwirkt.

Wie eingangs erwähnt, werden Heizkessel und insbesondere Holzvergaserkessel typischerweise bei einem Druck von max. 3 bar betrieben. Außerdem werden diese Kessel einem Produktionstest unterzogen, bei dem sie Drücken von 6 bar standhalten müssen. Durch die Verstärkungselemente, die mit der Dünnblechaußenwand und der Dünnblechinnenwand verschweißt sind, hält ein wasserführender (Leichtbau)Heizkessel, der mit solchen Dünnblech-Wandabschnitten hergestellt ist, diesen Drücken stand.

Bei manchen Ausführungsbeispielen erstreckt sich das Verstärkungselement vollständig entlang einer Richtung durch den Wandabschnitt. In der Richtung, der senkrecht zur Erstreckungsrichtung bzw. Verlaufsrichtung des Verstärkungselements ist, sind bspw. mehrere Verstärkungselemente parallel zueinander und beabstandet voneinander angeordnet, um dadurch den Wandabschnitt gleichmäßig zu verstärken.

Bei manchen Ausführungsbeispielen weist das Verstärkungselement ein Z-förmiges Profil auf. Die gegenüberliegenden Abschnitte, die mit der Außenwand bzw. der Innenwand verschweißt sind, bilden dabei den oberen bzw. den unteren Teil des "Z". Der mittlere Abschnitt ist dabei der mittlere Teil des "Z". Das Verstärkungselement kann auch andere Profilformen aufweisen, wie bspw. eine C-Form, eine Doppel-T-Form, eine S-Form, Dreiecksform usw. Grundsätzlich ist jede Form geeignet, die Kräfte von der Innenwand zur Außenwand übertragen kann und umgekehrt.

Auch müssen die Außenwand und Innenwand nicht eben sein, sondern sie können bspw. eine gewellte Form, Vertiefungen oder sonstige Versteifungsstrukturen aufweisen.

Bei manchen Ausführungsbeispielen weist der Heizkessel wenigstens zwei Wandabschnitte auf, die kommunizierend miteinander verbunden sind, sodass Wasser von dem einen zu dem anderen Wandabschnitt fließen kann.

Damit die in dem Heizkessel durch die Verbrennung erzeugte Wärme möglichst gut auf das Wasser übertragen werden kann, ist bei manchen Ausführungsbeispielen der Feuerraum, in dem die Wärme erzeugt wird, möglichst vollständig mit wasserführenden Wandabschnitten, die als Wärmetauscher fungieren, umgeben. Damit nicht für jeden Wandabschnitt ein eigener Zu- und Ablauf vorgesehen werden muss, sind bei manchen Ausführungsbeispielen die Wandabschnitte wenigstens teilweise kommunizierend miteinander verbunden, sodass das zu erwärmende Wasser von einem Wandabschnitt zum anderen fließen kann.

Bei manchen Ausführungsbeispielen sind wenigstens zwei Wandabschnitte rechtwinklig zueinander angeordnet. Dabei stoßen jeweils die Innenwände in einem rechten Winkel aneinander und sind an der Stoßstelle miteinander verschweißt. Das Verschweißen an der Stoßstelle kann dabei mittels Laserschweißen erfolgen oder durch konventionelles Schweißen, bei dem ein Zusatzwerkstoff verwendet wird, da die Stoßstelle von gut zugänglich ist.

Bei manchen Ausführungsbeispielen stoßen auch die Außenwände in einem senkrechten Winkel aneinander und sind auf ähnliche Art und Weise wie die Innenwände miteinander verschweißt. Da allerdings jede Schweißnaht eine potentielle Schwachstelle darstellt und undicht sein kann, sind bei manchen Ausführungsbeispielen die Außenwände der rechtwinklig miteinander verbundenen Wandabschnitte einstückig ausgebildet. Der Verbindungsbereich der Außenwände der rechtwinklig miteinander verbundenen Wandabschnitte bildet in diesem Fall bspw. zwei Winkel mit jeweils ungefähr 135 Grad. Dadurch ist insgesamt ein Winkel von ungefähr 90 Grad zwischen den beiden Außenwänden vorhanden und die Außenwände müssen nicht mit einem scharfen Knick von 90° geformt werden, der eine Schwachstelle in der Außenwand darstellen könnte.

Bei manchen Ausführungsbeispielen ist das Verstärkungselement einstückig ausgebildet. Dadurch ist eine besonders einfache Herstellung möglich, da das Verstärkungselement in einem Durchgang bspw. auf die Innenwand bzw. Außenwand aufgelegt werden kann und einem weiteren Durchgang verschweißt werden kann. Außerdem hat ein einstückiges Verbindungselement im Gegensatz zu einem das aus mehreren Teilen zusammengesetzt ist, ein geringeres Schwachstellenrisiko.

Bei manchen Ausführungsbeispielen weist der wasserführende Heizkessel eine wasserführende Trennwand auf. Die Trennwand ist im Feuerraum angeordnet und teilt den Feuerraum in zwei Hälften auf, bspw. in einen Feuerraum und einen Nachverbrennungsraum. Rauchgase und/oder Holzgase werden dann vom Feuerraum aus um die Trennwand herum in den Nachverbrennungsraum geleitet.

In dem Nachverbrennungsraum können brennbare Bestandteile des Rauchgases bzw. das Holzgas durch Zufuhr von Sekundärluft weiter bzw. nachverbrannt werden. Durch das Umleiten der Rauchgase um die Trennwand kann die Wärme aus diesem Nachverbrennungsprozesse sowie die im Feuerraum entstehende Wärme auf die Trennwand übertragen werden.

Die Trennwand ist ähnlich zum Wandabschnitt aufgebaut und weist zwei gegenüberliegende Außenwände aufweist, zwischen denen wenigstens ein Verstärkungselement angeordnet ist. Bei der Trennwand wird nicht zwischen Innenwand und Außenwand unterschiede, wie es bei dem Wandabschnitt der Fall ist, da im Falle der Trennwand beide "Außenwände" innerhalb des Feuerraums sind. Die wasserführende Trennwand ist bei manchen Ausführungsbeispielen kommunizierend mit dem wenigstens einen wasserführenden Wandabschnitt verbunden.

Wie oben erwähnt, betrifft ein weiterer Aspekt der vorliegenden Erfindung einen Pufferspeicher zum Speichern von Wasser. Der Pufferspeicher ist dazu eingerichtet, in einem Heizsystem zur Speicherung von Warmwasser angeordnet zu werden. Pufferspeicher werden typischerweise als Zwischenspeicher für Warmwasser verwendet, damit der Heizkessel nicht ständig zum Erwärmen von Wasser betrieben werden muss. Zum Beispiel kann der Heizkessel nur dann betrieben werden, wenn die Wassertemperatur in dem Pufferspeicher unter einen bestimmten Schwellwert fällt.

Der Pufferspeicher weist wenigstens zwei gegenüberliegende Wandabschnitte auf, zwischen denen wenigstens ein Verstärkungselement angeordnet ist, das mehrere Durchbrechungen aufweist, durch die Wasser strömen kann. Wie auch bei dem Wandabschnitt des oben beschriebenen Heizkessels, verbindet das mindestens eine Verstärkungselement die beiden Wandabschnitte miteinander. Dadurch können die Wandabschnitte ebenfalls mittels Dünnblech hergestellt werden, die bspw. eine Stärke von weniger als 5 mm oder sogar weniger als 2 mm bei manchen Ausführungsbeispielen aufweisen. Das Dünnblech kann dabei bspw. aus Edelstahl gebildet werden. Bei manchen Ausführungsbeispielen bilden die Wandabschnitte auch gleichzeitig die Außenwand des Pufferspeichers.

Das wenigstens eine Verstärkungselement ist mittels Laserschweißen von außen durch die gegenüberliegenden Wandabschnitte hindurch mit jeweils der Innenseite des entsprechenden Wandabschnitts wenigstens teilweise verschweißt. Das Laserschweißen erfolgt durch das Material der Wandabschnitte hindurch.

Bei manchen Ausführungsbeispielen sind die beiden gegenüberliegenden Wandabschnitte aus einem einstückigen Dünnblech hergestellt, sodass sie nur an einer Stoßstelle verschweißt werden müssen.

Das bzw. die Verstärkungselemente für den Pufferspeicher können die gleichen Eigenschaften haben, wie sie oben im Zusammenhang mit dem Heizkessel beschrieben wurden und entsprechend ein Z-förmiges, C-förmiges, Doppel-T-förmiges oder andersartig geformtes Profil haben, wie oben beschrieben.

Bei manchen Ausführungsbeispielen weist das wenigstens eine Verstärkungselement zwei gegenüberliegende Abschnitte auf, die jeweils an einer Innenseite eines Wandabschnitts verschweißt sind. Außerdem weist das Verstärkungselement mehrere Verbindungselemente auf, die die gegenüberliegenden Abschnitte miteinander verbinden. Zwischen zwei Verbindungselementen ist bei manchen Ausführungsbeispielen jeweils eine Durchbrechung angeordnet.

Der Pufferspeicher kann grundsätzlich in jeder beliebigen Form hergestellt werden. Bei manchen Ausführungsbeispielen ist er flach ausgestaltet und hat bspw. ein Fassungsvermögen von 300, 500, 750 oder 1000 Liter für das zu speichernde Wasser. Dabei kann der Pufferspeicher bspw. Außenmaße von 1 m in der Breite, 15 cm in der Tiefe und 2 m in der Höhe bis zu 1,5 m in der Breite, 33 cm in der Tiefe und 2 m in der Höhe aufweisen. Durch die flache Bauweise, bei der der Pufferspeicher bspw. nur eine Tiefe von 15 cm hat, kann er in einer Außenwand eines Hauses angeordnet werden, die bspw. typischerweise eine Tiefe von 36 cm aufweist. Die Tiefe von 33 cm passt bspw. in eine 50 cm Tonziegelwand, die ebenfalls typischerweise im Wohnungsbau verwendet wird. Damit ergeben sich völlig neue Anordnungsmöglichkeiten für den Pufferspeicher, die für einen gängigen zylinderförmigen Pufferspeicher nicht möglich sind.

So kann der Pufferspeicher bspw. in der Wand angeordnet sein und die Seite, die in den Raum zeigt ist bspw. nicht wärmeisoliert. Dadurch kann der Pufferspeicher gleichzeitig als Wandheizung dienen. Insbesondere, wenn die in den Raum zeigenden Wand aus Edelstahl gebildet ist, kann der Pufferspeicher auch entsprechend optisch gefällig wirken. Darüberhinaus sind die Laserschweißnähte, die dann an der Wand des Pufferspeichers sichtbar sind, gleichförmig gestaltet und optisch ansprechend.

Bei manchen Ausführungsbeispielen wird ein tragender Rahmen um den Pufferspeicher angeordnet, sodass er auch als tragendes Wandelement dienen kann.

Um an die notwendigen Anschlüsse des Pufferspeichers zu gelangen kann neben dem Pufferspeicher eine Nische oder ein Serviceschrank angeordnet werden, in dem der entsprechende Zugang zu den Anschlüssen des Pufferspeichers vorhanden ist. In dieser Nische oder in diesem Serviceschrank können auch bspw. ein Heizverteiler oder eine Pumpe untergebracht werden.

Im Folgenden wir ein Verfahren zum Herstellen eines wasserführenden Wandelements, insbesondere eines Wandelementes für einen wasserführenden Heizkessel, wie oben beschrieben, und für einen Pufferspeicher, wie oben beschrieben, dargestellt. Das Wandelement weist wenigstens zwei gegenüberliegende Außenwandelemente auf. Das Herstellungsverfahren umfasst bei manchen Ausführungsbeispielen die folgenden Schritte.

Zunächst wird wenigstens ein Außenwandelement angeordnet. Dies kann bspw. auf einem Förderband oder einem Montagetisch oder dergleichen sein. Als Nächstes wird wenigstens ein Verstärkungselement auf der Innenseite des Außenwandelements angeordnet. Typischerweise weist das Verstärkungselement, das oben detailliert beschrieben wurde, einen ebenen Abschnitt auf, an dem es mit der Innenseite des Außenwandelements verschweißt werden soll. Wenn das eine oder die mehreren Verstärkungselemente an den vorgesehenen Stellen auf das Außenwandelement angeordnet ist bzw. sind, wird als Nächstes ein Laserschweißvorgang gestartet. Bei dem Laserschweißen wird durch die Außenseite des Außenwandelements und dessen Material hindurch geschweißt, um das Verstärkungselement mit der Innenseite des Außenwandelements zu verschweißen.

Der Laser, der zum Schweißen verwendet wird, ist bei manchen Ausführungsbeispielen unterhalb des Außenwandelements angeordnet. Das heißt von oben nach unten betrachtet kommt zunächst das Verstärkungselement, das auf der Innenseite des Außenwandelements angeordnet ist, dann das Außenwandelement und der Laser ist unterhalb des Außenwandelements angeordnet, sodass der von dem Laser erzeugte Laserstrahl von unten durch die Außenseite des Außenwandelements durch das Material hindurch schweißt und folglich das Verstärkungselement mit dem Außenwandelement verschweißt. Das Laserschweißen wird dabei bei manchen Ausführungsbeispielen derart ausgeführt wird, dass eine kontinuierliche Schweißnaht entsteht.

Bei manchen Ausführungsbeispielen umfasst das Herstellungsverfahren auch das Formen eines rechtwinkligen Wandelements. Dabei werden zwei benachbarte Außenwandelemente rechtwinklig aneinander gelegt und an der Stoßstelle verschweißt. Ein gegenüberliegendes Außenwandelement wird an zwei hintereinander liegenden und beabstandeten Stellen jeweils mit einem Winkel von ungefähr 135 Grad geformt. Dadurch entsteht insgesamt ein rechtwinkliger Bereich, bei dem nur bei einem der beiden Außenwandelemente ein Stoßbereich entsteht, der zusammengeschweißt werden muss. Der Bereich des Außenwandelements mit den zwei Winkeln mit 135 Grad kann dabei aus einem Stück gebildet werden.

### Ausführungsbeispiel eines Biomasseheizkessels - Fig. 1 bis 9

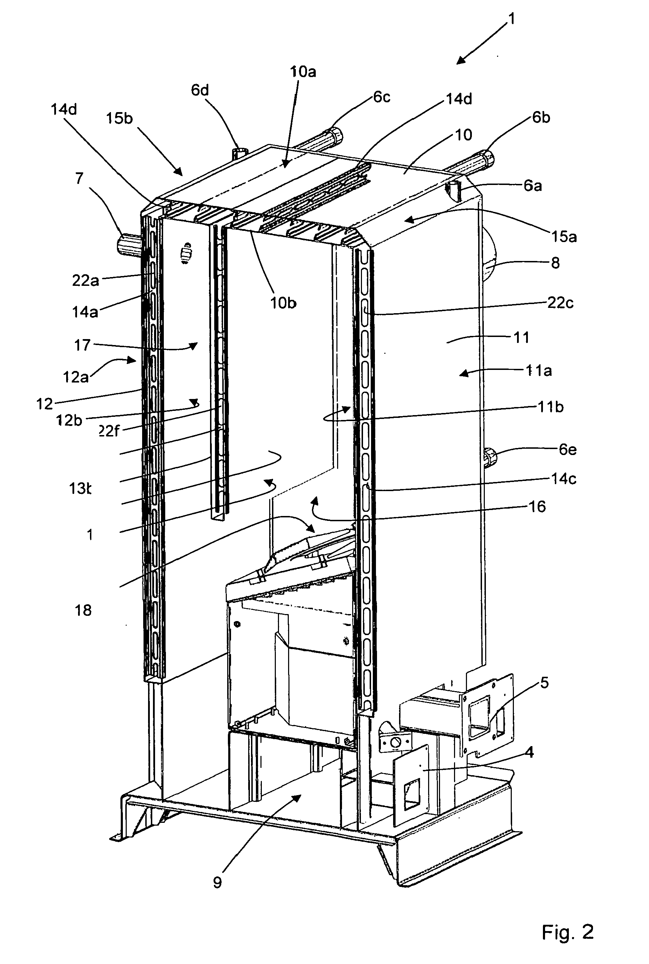

Zurückkommend zu den Fig. 1 bis 5 veranschaulichen diese ein Ausführungsbeispiel eines wasserführenden Biomasseheizkessels 1, der als Brennstoff Pellets verwendet. In der Fig. 1 ist der Holzvergaserkessel 1 in einer dreidimensionalen Ansicht gezeigt, während die Fig. 2 bis 5 ihn in unterschiedlichen Schnittansichten darstellen.

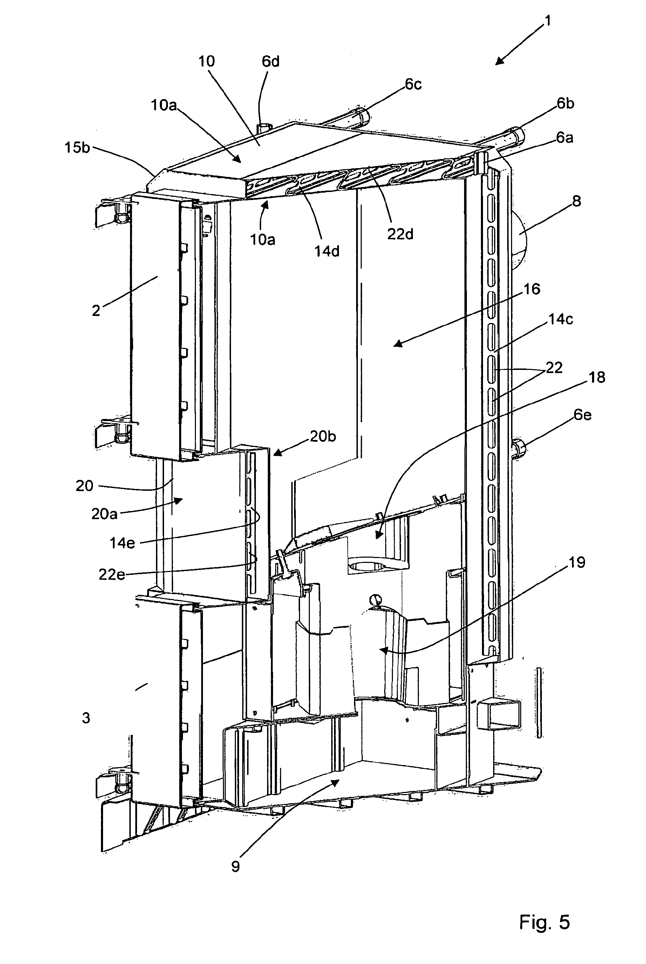

Der Heizkessel 1 hat einen Anschluss 5 für die Pelletzufuhr und einen Anschluss 4 für die Primärluftzufuhr. Die Pellets gelangen in einen unteren Verbrennungs- bzw. Holzvergasungsraum 19 (Fig. 5) und werden dort verbrannt bzw. zu Holzgas vergast. Oberhalb des unteren Verbrennungsraumes 19 befindet sich ein oberer Verbrennungsraum 18, in den die bei der Verbrennung der Pellets entstehende Flamme zusammen mit den Rauch- und Holzgasen geführt wird. Unterhalb des unteren Raumes 19 befindet sich ein Raum 9 in dem ein Aschenkasten angeordnet werden kann, um Verbrennungsrückstände aufzunehmen.

Die Flamme und das Rauch- bzw. Holzgas gelangen aus dem oberen Verbrennungsraum 18 in einen Feuerraum 16, der mittels einer Trennwand 13 von einem Nachverbrennungsraum 17 abgetrennt ist. Im Nachverbrennungsraum 17 können brennbare Bestandteile des Rauchgases bzw. das Holzgas nachverbrannt werden. Auf die Trennwand 13 bzw. auf das Wasser in der Trennwand 13 wird sowohl die Wärme aus dem Nachverbrennungsraum 17 als auch aus dem Feuerraum 16 übertragen.

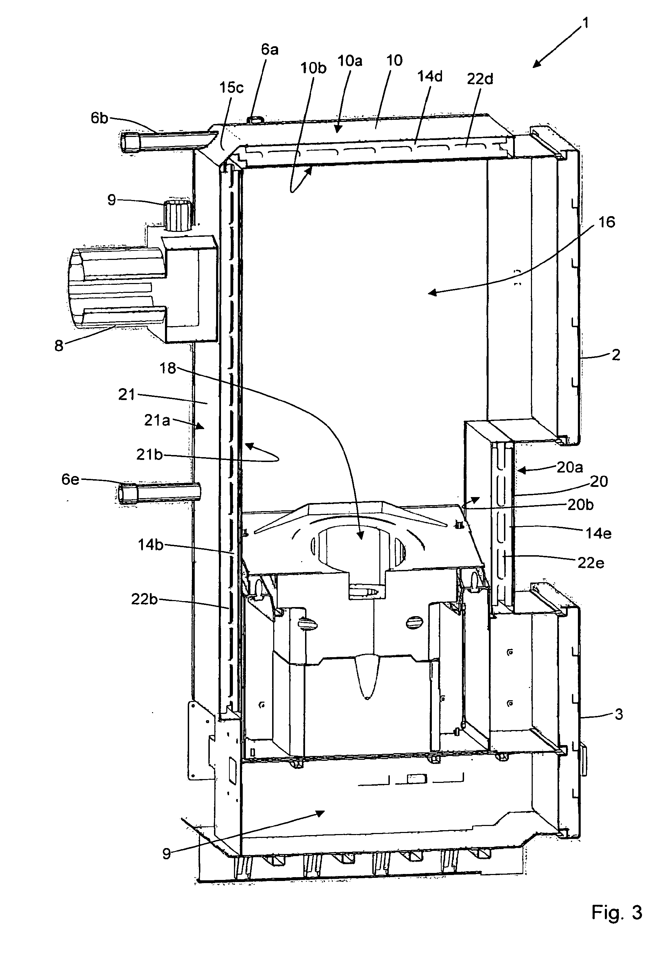

Im Nachverbrennungsraum 17 ist ein Rauchgasabzug 7 vorhanden, durch den die Rauchgase abziehen können. Der Rauchgasabzug 7 ist mit einem Rauchgaseingang 9 verbunden, der wiederum mit einem auf der Rückseite des Heizkessels 1 angeordneten Kaminanschluss 8 verbunden ist (Fig. 3). Dadurch, dass der Rauchgasabzug 7 in dem zweiten Nachverbrennungsraum angeordnet ist, werden die Flamme, die heißen Rauchgase und das Holzgas einmal um die Trennwand 13 herumgeleitet und können ihre Wärme an die Trennwand 13 abgeben. Der Feuerraum 16 zusammen mit dem Nachverbrennungsraum 17 sind über eine Feuerraumtür 2 zugänglich, während der untere Bereich des Heizkessels 1 mit dem Aschekasten durch eine untere Tür 3 zugänglich ist.

Zur Erwärmung von Wasser hat der wasserführende Heizkessel 1 mehrere wasserführende Wandabschnitte, die den Feuerraum 16 mit dem Nachverbrennungsraum 17 umgeben: einen oberen Wandabschnitt 10, eine rechte Seitenwand 11, eine linke Seitenwand 12, eine Vorderwand 20, eine Rückwand 21 und die Trennwand 13.

Diese wasserführenden Wandabschnitte 10-13, 20 und 21 sind mit mehreren Wasseranschlüssen (Wasserzuläufen bzw. Wasserrückläufen) 6b, 6c und 6e, 6f verbunden und sind außerdem untereinander kommunzierend verbunden. Dabei sind zwei Wasseranschlüsse 6b und 6c am oberen Wandabschnitt 10 angeordnet und zwei Wasseranschlüsse 6e und 6f an der Rückwand 21. Durch diese Wasseranschlüsse 6b, c, e und 6f kann zu erwärmendes Wasser gezielt durch die (untereinander wasserführend verbundenen) Wandabschnitte 10-13, 20 und 21 zirkulieren, sodass die in dem Heizkessel 1 und insbesondere im Feuerraum 16 und Nachverbrennungsraum 17 erzeugte Wärme möglichst vollständig auf das zirkulierende Wasser übertragen wird.

An der rechten Seitenwand 11 und an der linken Seitenwand 12 befindet sich jeweils eine Tauchhülse 6a bzw. 6d in der jeweils ein Temperatursensor angeordnet ist, um die Wassertemperatur des in den Seitenwänden 11 und 12 zirkulierenden Wassers zu bestimmen.

Die äußeren wasserführenden Wandabschnitte 10-12, 20 und 21 sind alle sandwichartig aufgebaut. Sie haben eine Außenwand 10a-12a, 20a und 21a und eine Innenwand 10b-12b, 20b und 21b. Die Innenwände 10b-12b, 20b und 21b bilden dabei die Innendwände des Feuerraums 16 bzw. Nachverbrennungsraums 17.

Zwischen den Außenwänden 10a-12a, 20a und 21a und den Innenwänden 10b-12b, 20b und 21b sind jeweils mehrere Verstärkungselemente 14a-e angeordnet, die die jeweilige Außenwand 10a-12a, 20a und 21a mit der jeweiligen Innenwand 10b-12b, 20b und 21b des jeweiligen Wandabschnitts 10-12, 20 und 21 verbinden.

Die Innenwände 10b-12b, 20b und 21b sind jeweils aus Edelstahl hergestellt, um den hohen Temperaturen im Feuerraum 16 bzw. Nachverbrennungsraum 17 standhalten zu können. Die Außenwände 10a-12a, 20a und 21b sind hingegen aus einer weniger hochwertigen Stahlsorte hergestellt, in diesem Fall aus ST52 Stahl, da die Außenwände nicht den hohen Temperaturen ausgesetzt sind, sondern lediglich der Wassertemperatur des Wassers, das im Inneren der jeweiligen Wandabschnitte 10-12, 20a und 21a zirkuliert und dem zugehörigen Wasserdruck.

Da die Trennwand 13 vollständig im Feuerraum 16 bzw. Nachverbrennungsraum 17 angeordnet ist und demnach auf beiden Seiten hohen Temperaturen ausgesetzt ist, sind die beiden Außenwände 13a und 13b beide aus Edelstahl hergestellt. Die Trennwand 13 weist ebenso wie die anderen Wandabschnitte 10-12, 20 und 21 mehrere Verstärkungselemente 14f auf, die die beiden Außenwände 13a und 13b miteinander verbinden.

Alle Verstärkungselemente 14a-f der Wandabschnitte 10-13, 20 und 21 weisen entsprechend Durchbrechungen 22a-f auf, durch die das Wasser in den Wandabschnitten 10-13, 20 und 21 fließen kann. Die Verstärkungselemente 14a-f sind dabei aus Schwarzblech hergestellt.

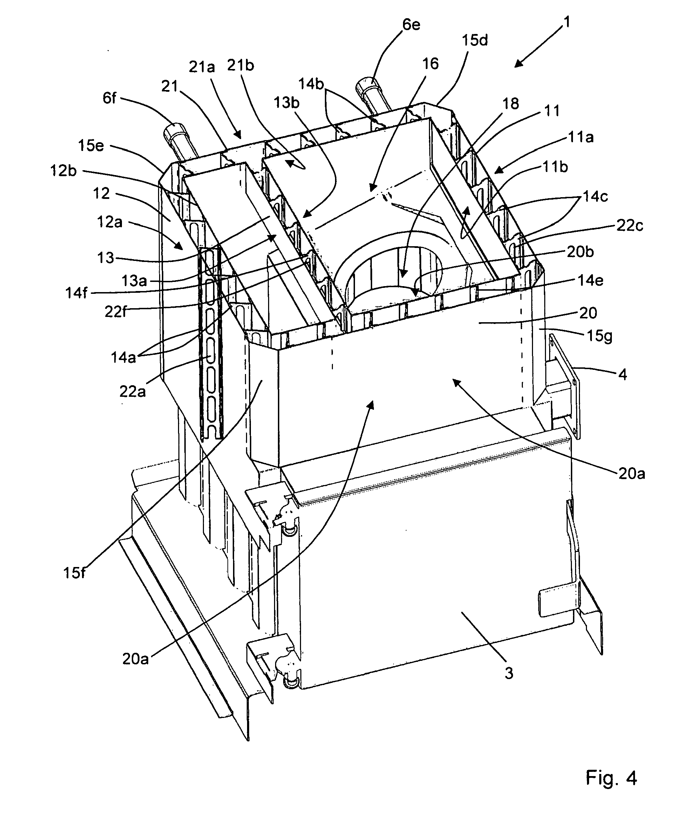

Die einzelnen Wandabschnitte 10-13, 20 und 21 sind kommunizierend miteinander verbunden (siehe bspw. Fig. 4). Dabei bilden bspw. die Rückwand 21, die Vorderwand 20 und die linke 12 und rechte Seite 13 zusammen mit der Trennwand 13 einen durchgehenden Hohlraum, durch den das Wasser fließt. Der Hohlraum wird dabei durch die jeweils zueinander beabstandeten Außenwände 10a-13a, 20a und 21a und Innenwände 10b-12b, 20b und 21b bzw. Außenwand 13b der einzelnen Wandabschnitte 10-13, 20 und 21 gebildet. Dabei bestimmen die Verstärkungselemente 14a-f, wie weit der Abstand ist.

Die Verstärkungselemente 14a-f erstrecken sich in den stehenden Wandabschnitten 11-13, 20 und 21 von unten nach oben jeweils durch den gesamten Wandabschnitt 11-13, 20 und 21. Im Falle des oberen Wandabschnitts 10 erstrecken sich die Verstärkungselemente 14d von vorne nach hinten. Dabei weisen die linke 12 und rechte 11 Seitenwand sowie die Trennwand 13 jeweils sechs gleichmäßig beabstandete Verstärkungselemente 14a, c und f auf. Der obere Wandabschnitt 10 und die Vorderwand 20 und die Rückwand 21 weisen jeweils sieben gleichmäßig beabstandete Verstärkungselemente 14b, d und e auf.

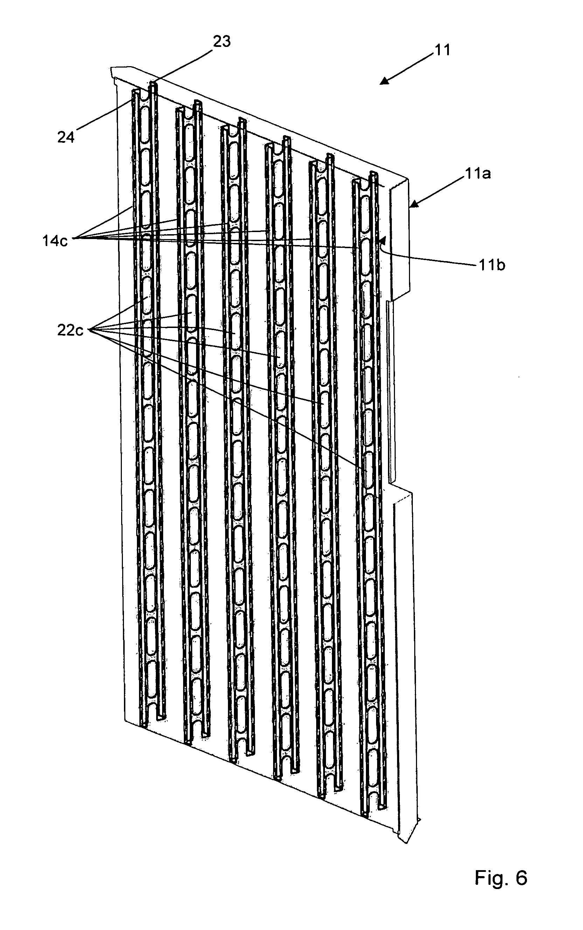

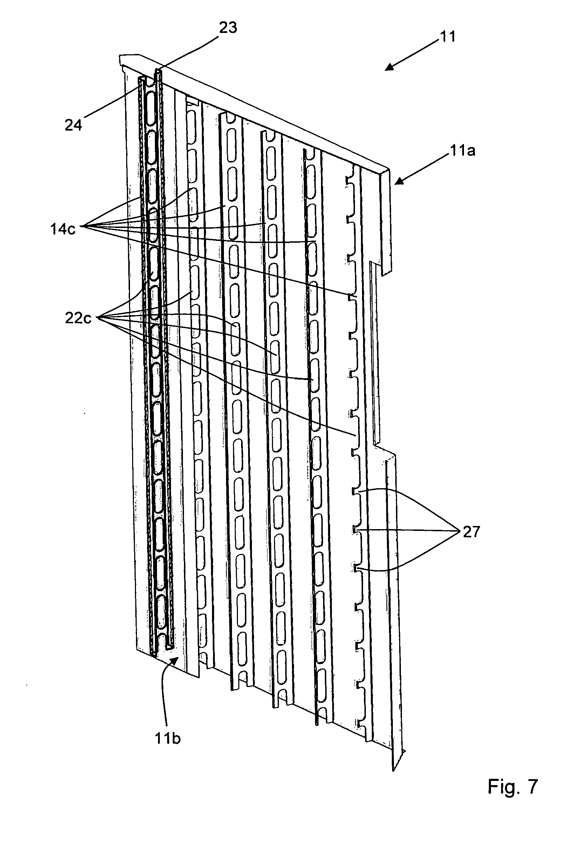

In den Fig. 6 und 7 ist beispielhaft der rechte Seitenwandabschnitt 11 genauer gezeigt, anhand dessen der Grundaufbau der Wandabschnitte 10-13, 20 und 21 beschrieben wird. Der rechte Wandabschnitt 11 hat, wie erwähnt, sechs Verstärkungselemente 14c, die sich jeweils einmal vollständig von oben nach unten durch den rechten Wandabschnitt 11 erstrecken. Die Verstärkungselemente 14c sind zwischen der Außenwand 11a und der Innendwand 11b angeordnet. Dabei hat jedes Verstärkungselement 14c mehrere Durchbrechungen 22c (vierzehn im vorliegenden Fall) durch die Wasser in dem rechten Wandabschnitt 11 fließen kann.

Jedes Verstärkungselement 14c hat außerdem zwei ebene Befestigungsabschnitte 23 und 24, die einander gegenüberliegend angeordnet sind. Die ebenen Befestigungsabschnitte 23 und 24 erstrecken sich über die gesamte Länge des Verstärkungselements 14c. Dabei ist das Verstärkungselemente 14c mit dem ersten Befestigungsabschnitt 23 mit der Außenwand 11a verschweißt und mit dem gegenüberliegenden Befestigungsabschnitt 24 mit der Innenwand 11b. Dabei hat das Verstärkungselemente 14c, wie auch die anderen Verstärkungselemente 14a, b und d-f, ein Z-förmiges Profil. Die beiden ebenen Befestigungsabschnitte 23 und 24 bilden dabei den oberen bzw. unteren Teil des "Z". Den mittleren Teil des "Z" bilden Verbindungselemente 27, die die beiden ebenen Befestigungsabschnitte 23 und 24 miteinander verbinden. Die Zwischenräume zwischen den Verbindungselementen 27 sind dabei die Durchbrechungen 22c.

Durch die feste Verbindung der Außenwände 10a-13a, 20a und 21a mit den Innenwänden 10b-12b, 20b, 21b bzw. mit der Außenwand 13b über die Verstärkungselemente 14a-f können die Wandabschnitte 10-13, 20 und 21 aus Dünnblech gefertigt werden. Die Verstärkungselemente 14a-f sind außerdem in den jeweiligen Wandabschnitten 10-13, 20 und 21 gleichmäßig verteilt, sodass sie sie gleichmäßig verstärken und somit einer Verformung der Außenwände 10a-13a, 20a und 21a bzw. der Innenwände 10b-12b, 20b, 21b entgegenwirken können. Im vorliegenden Ausführungsbeispielen weisen sowohl die Außenwände 10a-13a, 20a, 21a und 13b sowie die Innenwände 10b-12b, 20b und 21b jeweils einen Blechwandstärke von 1,5 mm auf.

Wie eingangs erwähnt, werden die Verstärkungselemente 14a-f mittels Laserschweißen mit den Außenwänden 10a-13a, 13b, 20a und 21a bzw. Innenwänden 10b-12, 20b und 21b verschweißt.

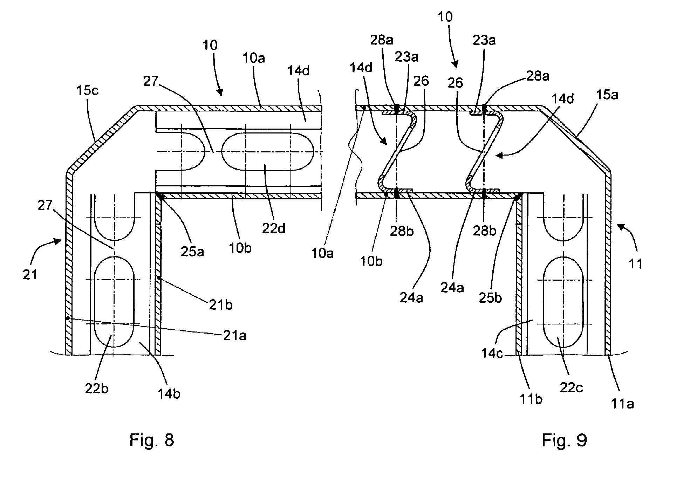

In den Fig. 8 und 9 sind jeweils zweidimensionale Querschnitte einer Eckverbindung zwischen dem oberen Wandabschnitt 10 und der Rückwand 21 (Fig. 8) bzw. der rechten Seitenwand 11 (Fig. 9) gezeigt, in denen die Schweißnähte gezeigt sind und anhand derer beispielhaft die Verschweißung der Verstärkungselemente 14a-f erläutert wird. Die Fig. 8 entspricht dabei einem Schnitt, wie er in Fig. 3 veranschaulicht ist und die Fig. 9 einem Schnitt, wie er bspw. in Fig. 2 veranschaulicht ist.

Die Verstärkungselemente 14d des oberen Wandabschnitts 10 weisen jeweils einen oberen ebenen Befestigungsabschnitt 23a und einen unteren ebenen Befestigungsabschnitt 24a auf, die jeweils auch den oberen bzw. unteren Teil des "Z"-Profils der Verstärkungselements 14d darstellen. Verbunden sind die oberen und unteren Befestigungsabschnitte 23a, b jeweils durch ein mittleres Verbindungselement 26, das auch den mittleren Teil des "Z"-Profils der Verstärkungselements 14d bildet.

Die oberen ebenen Befestigungsabschnitte 23a sind jeweils mit einer Schweißnaht 28a mit der Außenwand 10a des oberen Wandabschnitts 10 verschweißt. Die unteren ebenen Befestigungsabschnitte 24a sind jeweils mit einer Schweißnaht 28b mit der Innwandwand 10b des oberen Wandabschnitts 10 verschweißt. Die Schweißnähte 28a und 28b sind dabei jeweils durch Laserschweißen gebildet, bei dem ein Laserstrahl von außen durch die Außenwand 10a bzw. von außen durch die Innenwand 10b die Außenwand 10a bzw. Innenwand 10b mit dem jeweiligen Befestigungsabschnitt 23a bzw. 24a verschweißt hat.

Durch das Verschweißen der Außenwand 10a und der Innenwand 10b an dem Verstärkungselement 14d wird somit ein "Ausbeulen" oder eine andere Art von Verformung der Außenwand 10a bzw. der Innenwand 10b verhindert. Das Verstärkungselement 14d hält die Außenwand 10a und die Innenwand 10b zusammen und überträgt Kräfte, die auf die eine Wand wirken über die Befestigungsabschnitte 23a und 24a und das Verbindungselement 26 auf die andere Wand.

Das Z-förmige Profil des Verstärkungselements 14d (bzw. 14a-c und 14e-f) ist dabei einfach herstellbar, da es einfach durch zweimaliges Biegen eines ebenen Blechstückes hergestellt werden kann. Außerdem bietet das Z-Profil eine vergleichsweise hohe Steifigkeit sowohl hinsichtlich Zug- als auch Druckbelastung. Durch die symmetrische Gestalt liegt außerdem der Schwerpunkt in der Mitte des "Z", sodass ein Verstärkungselement 14d, das auf den Befestigungsabschnitt 23a oder 24a gestellt wird, stehenbleibt und damit ohne weitere Befestigung verschweißt werden kann.

Um die Zahl der Schweißnähte insgesamt möglichst gering zu halten, sind die rechtwinkligen Eckverbindungen zwischen Wandabschnitten 10-12, 20 und 21 an den Außenwänden mit zwei Winkeln von jeweils 135° gebildet (Fig. 8 und 9).

Im Falle der Fig. 8 geht dabei die Außenwand 21a der Rückwand 21 in einem Bereich 15c in zwei Winkeln von 135° in die Außenwand 10a des oberen Wandabschnitts 10 über, ohne dass dabei eine Schweißnaht notwendig wäre. Gleiches gilt für die Außenwand 11a des rechten Wandabschnitts 11, die in einem Bereich 15a in die Außenwand 10a des oberen Wandabschnitts 10 durch zwei Winkel von jeweils 135° übergeht sowie die Außenwand 12a des linken Wandabschnitts in einem derartigen Übergang 15b in die Außenwand 10a des oberen Wandabschnitts 10 übergeht. Auch hier ist keine Schweißnaht notwendig. Auch zwischen der Vorderwand 20 gibt es auch einen solchen Übergang 15g zwischen Vorderwand 20 und rechtem Wandabschnitt 11 bzw. einen Übergang 15f zwischen Vorderwand 20 und linkem Wandabschnitt 15f (Fig. 1 und Fig. 4). Auch zwischen der Rückwand 21 und dem rechten Wandabschnitt 11 ist ein solcher Übergang 15d vorhanden sowie ein gleicher Übergang 15e zwischen Rückwand 21 und dem linken Wandabschnitt 12 vorhanden ist.

Die Innenwände 10b-12b, 20b und 21b sind an den jeweiligen rechtwinkligen Übergängen der Wandabschnitte 10-12, 20 und 21 jeweils an der Stoßstelle miteinander verschweißt. So ist bspw. die Innenwand 21b der Rückwand 21 mit der Innenwand 10b des oberen Wandabschnitts 10 an der rechtwinkligen Stoßstelle mit einer Schweißnaht 25a verbunden (Fig. 8). Auf ähnliche Art und Weise sind die Innenwände 11b und 10b mit einer Schweißnaht 25b verbunden (Fig. 9).

Dabei erstrecken sich die Schweißnähte jeweils über die gesamte Stoßstelle der Innenwände 10-21, 20 und 21 um entsprechend den Hohlraum der zugehörigen Wandabschnitte 10-12, 20 und 21 abzudichten. Diese Schweißnaht kann dabei durch herkömmliches Schweißen unter Verwendung eines Zusatzwerkstoffes erfolgen, da die Stoßstelle gut zugänglich ist.

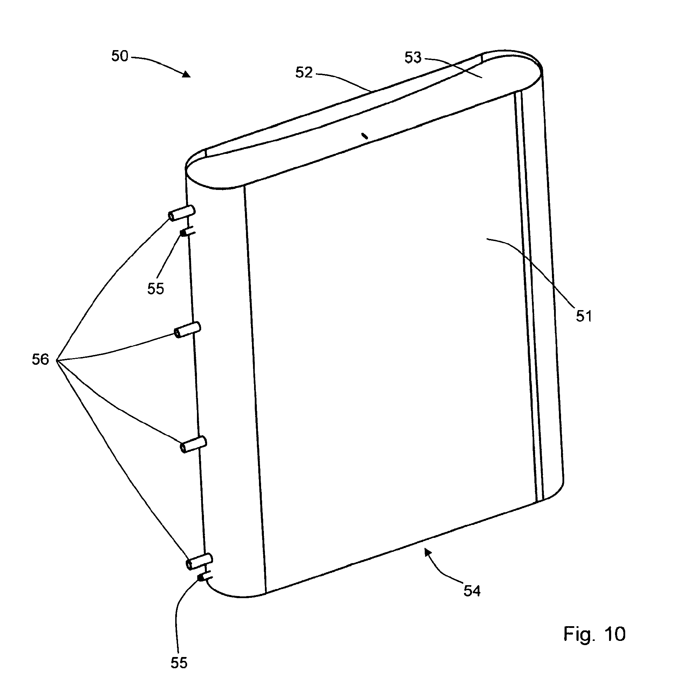

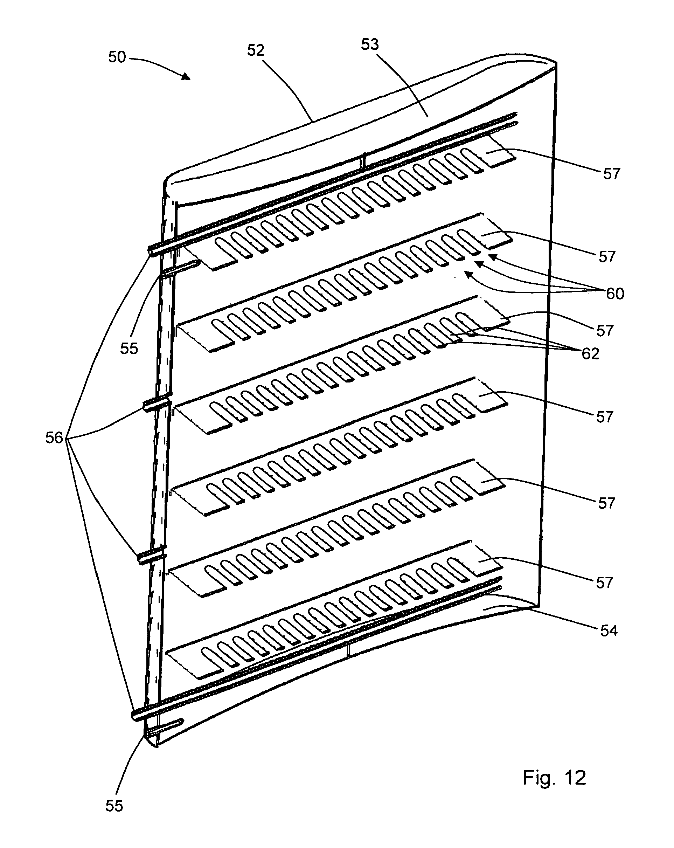

### Ausführungsbeispiel eines Pufferspeichers - Fig. 10-13

Ein Ausführungsbeispiel eines Pufferspeichers 50 wird nun im Zusammenhang mit den Fig. 10 bis 13 erläutert.

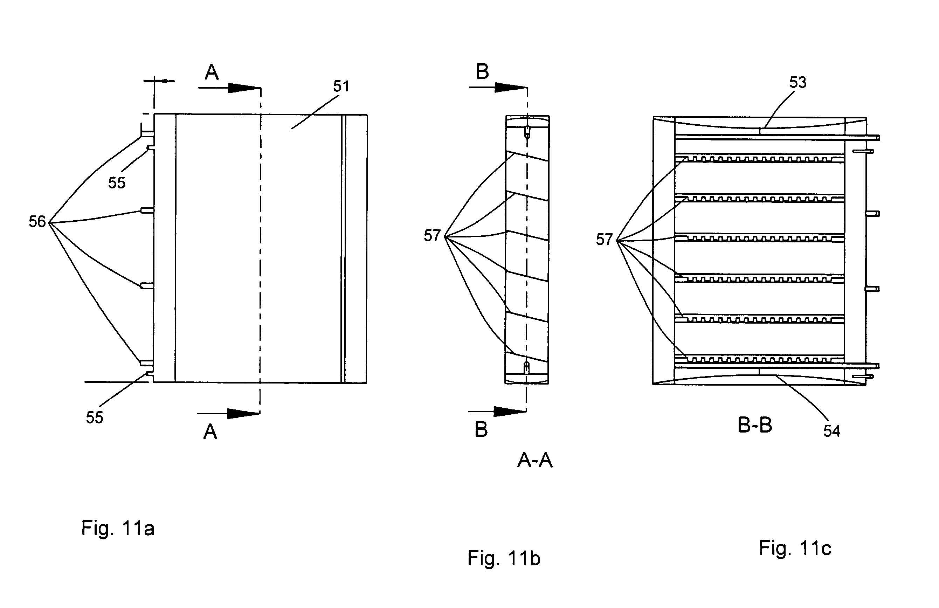

Der Pufferspeicher 50 hat von außen eine an einen "Flachmann" erinnernde Form. Er hat zwei Außenwandabschnitte 51 und 52 die einander gegenüberliegen angeordnet sind. Der Pufferspeicher 51 ist dabei an seinen schmalen Seiten (links und rechts in Fig. 10) rund ausbildet. Der Pufferspeicher 50 ist oben und unten mit einem Deckel 53 und Boden 54 wasserdicht geschlossen. Der Deckel 53 und der Boden 54 sind dabei leicht nach innen gewölbt (Fig. 11c).

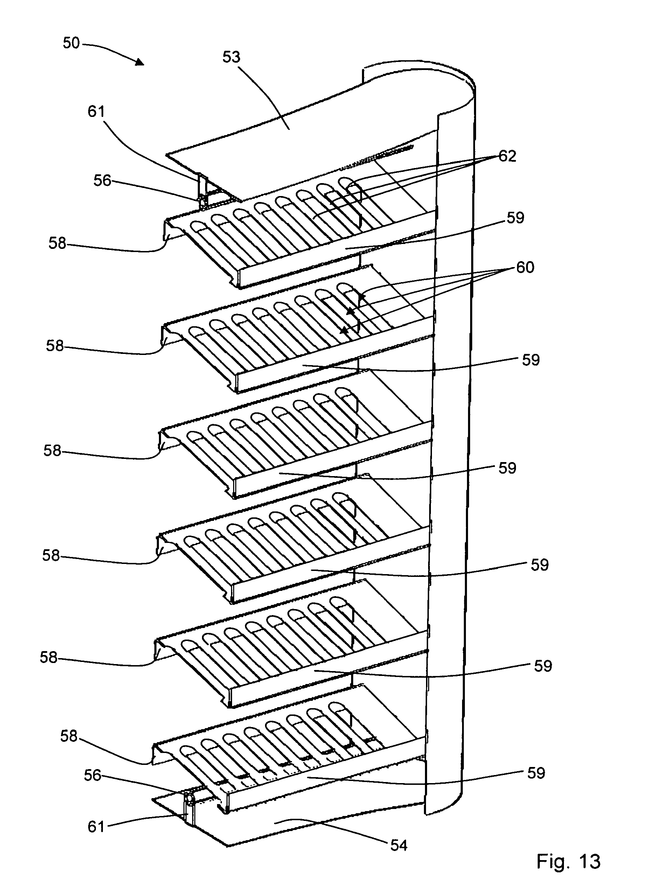

Außerdem weist der Pufferspeicher eine Anzahl von Wasser- und Fühleranschlüssen 56 an einer runden Seite auf (linke Seite in Fig. 10), sowie zwei Halterungen 55 an denen der Pufferspeicher 50 verschraubt werden kann. Der unterste und oberste Wasseranschluss 56 erstreckt sich jeweils durch den Pufferspeicher 50 von einem runden Ende zum anderen und ist jeweils zur Stabilisierung in der Mitte mit einer Halterung 61 am Deckel 53 bzw. Boden 54 befestigt (Fig. 13).

Im Inneren des Pufferspeichers 50 sind sechs Verstärkungselemente 57 vorhanden, die die beiden Außenwandabschnitte 51 und 52 miteinander verbinden. Die Verstärkungselemente 57 haben ein Z-förmiges Profil (Fig. 13). Sie weisen zwei gegenüberliegende ebene Befestigungsabschnitte 58 und 59 auf, die jeweils den oberen bzw. unteren Teil des "Z" bilden. Der erste Befestigungsabschnitt 58 ist mit einem Außenwandabschnitt 52 verschweißt und der zweite Befestigungsabschnitt 59 mit dem gegenüberliegenden Außenwandabschnitt 51.

Außerdem weist jedes Verstärkungselement 57 eine Anzahl von Durchbrechungen 60 auf, die nebeneinander in Richtung der Längsrichtung des Verstärkungselements 57 angeordnet sind (ähnlich wie die Durchbrechungen 22a-f der Verstärkungselemente 14a-f des oben beschriebenen Heizkessels 1). Durch die Durchbrechungen 60 kann das Wasser, das in dem Pufferspeicher 50 gespeichert wird hindurch fließen. Das Verstärkungselement 57 weist außerdem eine Anzahl von Verbindungselementen 62 auf, die den ersten 58 und zweiten Befestigungsabschnitt 59 miteinander verbinden. Zwischen zwei Verbindungselementen 62 ist jeweils eine Durchbrechung 60 vorhanden. Die Verbindungselemente 62, die quasi den mittleren Teil des "Z" bilden, sind stegartig ausgebildet und entstehen bspw. wenn die Durchbrechungen 60 in das Blech gestanzt werden, aus dem die Verstärkungselemente 57 hergestellt werden.

Dadurch dass die Verstärkungselemente 57 jeweils mit den gegenüberliegenden Außenwandabschnitten 51 und 52 verschweißt sind, werden Kräfte, die auf einen Außenwandabschnitt wirken auf den anderen übertragen und umgekehrt. Insbesondere der Wasserdruck des zu speichernden Wassers, der bspw. bei Dünnblech zu Verformungen führen könnte, wird durch die Verstärkungselemente 57 aufgenommen, die die gegenüberliegenden Außenwandabschnitte 51 und 52 zusammenhalten und dadurch ein "Ausbeulen" verhindern.

Im vorliegenden Fall ist der Pufferspeicher 50 bzw. die Außenwandabschnitte 51 und 52 aus einem Edelstahlblech mit einer Wandstärke von 1 mm gebildet. Ohne Verstärkungselemente 57 würde sich ein solcher Pufferspeicher verformen.

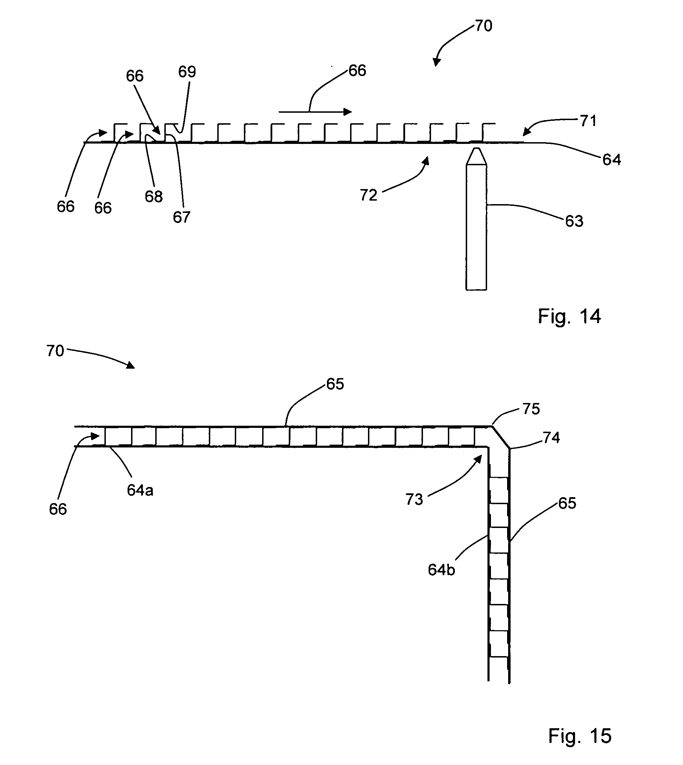

### Ausführungsbeispiel eines Herstellungsverfahren - Fig. 14 und 15

Im Folgenden wird anhand der Fig. 14 und 15 ein Herstellungsverfahren zum Herstellenden eines wasserführenden Wandelements 70 aus Dünnblech, z.B. mit einer Wandstärke von 1,5 mm, beschrieben, wie es bspw. bei dem oben beschriebenen Wandabschnitten 10-13, 20 und 21 oder bei dem Pufferspeicher 50 zum Einsatz kommt.

Zunächst wird zur Herstellung des Wandelements 70 ein Außenwandelement 64 bspw. auf einen Montagetisch oder ein Förderband gelegt. Danach wird eine Vielzahl von Verstärkungselementen 66 jeweils in gleichem Abstand auf die Innenseite 71 des Außenwandelements 64 gelegt. Die Innenseite 71 ist die Seite, die der Außenseite 72 gegenüberliegt, mit der das Außenwandelement 64 auf dem Montagetisch oder dem Förderband liegt.

Die Verstärkungselemente 66 haben ein Z-förmiges Profil, wie es oben schon im Zusammenhang mit den Verstärkungselementen 14a-f und 57 beschrieben wurde. Dabei hat jedes Verstärkungselement 66 einen oberen 68 und einen unteren Befestigungsabschnitt 69. Beide Befestigungsabschnitte 68 und 69 sind eben ausgebildet und dienen als Befestigungsfläche an der sie jeweils mit dem oberen 65 bzw. unteren Außenwandelement 64 verschweißt werden. Ein Verbindungselement 67 verbindet jeweils den oberen 68 mit dem unteren Befestigungsabschnitt 69.

Unter dem Außenwandelement 64 ist ein Laser 63 angeordnet, der einen Laserstrahl von unten auf die Außenseite 72 des Außenwandelements 64 richtet. Der Laserstrahl weist eine Energie auf, die ausreicht, um das Material des Außenwandelements 64 und des darüber liegenden Verstärkungselements 66 bzw. dessen Befestigungsabschnitt 68 (bzw. 69) aufzuschmelzen. Der Laser 63 verschweißt dadurch das Außenwandelement 64 von der Außenseite 72 hindurch mit dem auf der Innenseite 71 angeordneten Verstärkungselement 66 bzw. mit dessen Befestigungsabschnitt 68.

Der Laser 63 verschweißt dabei das Verstärkungselement 66 an dem Befestigungsabschnitt 68 entlang seiner Längsausrichtung, die in Fig. 14 und 15 senkrecht zur Papierebene verläuft. Dazu wird der Laser 63 entsprechend senkrecht zur Papierebene verfahren. Dabei wird das Verstärkungselement 66 mit dem Befestigungsabschnitt 68 vollständig mit der Innenseite 71 des Außenwandelements 64 verschweißt. Die dabei entstehende Schweißnaht ist kontinuierlich und weist keine Unterbrechungen auf.

Sobald eine Schweißnaht für ein Verstärkungselement 66 vollständig hergestellt ist, wird das Außenwandelement 64 mit den darauf angeordneten Verstärkungselementen 66 in Richtung des Lasers 63 entlang des Pfeils 66 nach rechts verschoben, bis das nächste Verstärkungselement 66 mit seinem Befestigungsabschnitt 68 entsprechend mittig über dem Laser 63 angeordnet ist und die nächste Schweißnaht für das nächste Verstärkungselement 66 hergestellt werden kann.

Das obere Außenwandelement 65 wird auf ähnliche Art und Weise wie oben beschrieben mit den Verstärkungselementen 66 verschweißt. Dabei wird das obere Außenwandelement 65 auf den Montagetisch oder das Förderband gelegt und das Außenwandelement 64 mit den bereits darauf verschweißten Verstärkungselementen 66 wird entsprechend auf die Innenseite des oberen Außenwandelements 65 gelegt. Dann wird der oben beschrieben Laserschweißvorgang für jedes Verstärkungselement analog durchgeführt.

Die Herstellung eines wasserführenden Wandelements 70 mit einem rechten Winkel ist in Fig. 15 veranschaulicht.

Dabei wird ein durchgehendes Außenwandelement 65 des Wandelements 70 an zwei beabstandeten Stellen 74 und 75 in dem Bereich des rechten Winkels jeweils um 135° gebogen, sodass insgesamt ein rechter Winkel entstehen. Gegenüberliegend von dem durchgehenden Außenwandelement 65 sind zwei Außenwandelemente 64a und 64b angeordnet, die jeweils einen Schenkel des rechtwinkligen Wandelements 70 bilden. Die Strecke zwischen den beiden Winkelstellen 74 und 75 fehlt bei den zwei Außenwandelementen 64a und 64b sodass diese in einem rechten Winkel aneinander liegen, wenn das Wandelement 70 rechtwinklig geformt wird. An der rechtwinkligen Stoßstelle 73 der beiden aneinanderliegenden Außenwandelemente 64a und 64b werden diese miteinander verschweißt. Dies geschieht mittels eines konventionellen Schweißverfahrens bei dem Zusatzwerkstoffe zum Einsatz kommen.

Durch den Übergang mit den zwei 135° Winkeln ist es möglich, insgesamt ein rechtwinkliges Wandelement 70 herzustellen, bei dem nur auf einer Außenwandseite 64a, 64b geschweißt werden muss, während die andere gegenüberliegende Außenwandseite 65 durchgehend ausgestaltet sein kann. Dadurch ist nicht nur insgesamt die Stabilität und Wasserdichtigkeit des Wandelements 70 besser als bei einem Elemente bei dem beide Außenwände im Eckbereich geschweißt werden müssen, sondern der Herstellungsprozess ist schneller, einfacher und auch kostengünstiger.

Das Wandelement 70 kann dabei quasi in einem Endlosverfahren hergestellt werden und wird dann bspw. einfach entsprechend dem Bedarf zugeschnitten.

Die Wandelemente 70 können dabei auch modulartig hergestellt werden, sodass bspw. ein Heizkessel einfach aus den einzelnen Wandelementmodulen zusammengesetzt werden kann.

Wie oben bereits erwähnt, ist die vorliegende Erfindung nicht auf Verstärkungselemente mit Z-förmigem Profil beschränkt, sondern es können auch beliebige andere Profile verwendet werden (bspw. C-förmig, doppel-T-förmig, etc.), die dazu geeignet sind die beiden gegenüberliegenden Außenwandabschnitte miteinander zu verbinden und so auf die Außenwandabschnitte wirkende Kräfte zu übertragen bzw. aufzunehmen.

## Patentansprüche

1. Wasserführender Heizkessel, insbesondere Biomasseheizkessel wie Pelletheizkessel, Scheitholzheizkessel und/oder Holzvergaserheizkessel, umfassend:
einen Feuerraum (16); und
wenigstens einen wasserführenden Wandabschnitt (10, 11, 12, 20, 21), der den Feuerraum (16) wenigstens teilweise umgibt, wobei
der wenigstens eine wasserführende Wandabschnitt (10, 11, 12, 20, 21) eine Außenwand (10a, 11a, 12a, 20a, 21 a), eine Innenwand (10b, 11b, 12b, 20b, 21 b) und wenigstens ein Verstärkungselement (14a-e) aufweist;
das wenigstens eine Verstärkungselement (14a-e) zwischen der Außenwand (10a, 11a, 12a, 20a, 21a) und der Innenwand (10b, 11b, 12b, 20b, 21b) angeordnet ist und wenigstens eine Durchbrechung (22a-e) aufweist, durch die Wasser strömen kann;
der wenigstens eine wasserführende Wandabschnitt (10, 11, 12, 20, 21), die Außenwand (10a, 11a, 12a, 20a, 21 a), die Innenwand (10b, 11 b, 12b, 20b, 21 b) und das wenigstens eine Verstärkungselement (14a-e) wenigstens teilweise aus Metall sind; und
das wenigstens eine Verstärkungselement (14a-e) mittels Laserschweißen von außen durch die Außenwand (10a, 11a, 12a, 20a, 21a) und/oder von außen durch die Innenwand (10b, 11b, 12b, 20b, 21b) des Wandabschnitts (10, 11, 12, 20, 21) hindurch jeweils mit der Innenseite der Außenwand (10a, 11a, 12a, 20a, 21a) und/oder der Innenseite der Innenwand (10b, 11b, 12b, 20b, 21b) wenigstens teilweise verschweißt ist.

2. Wasserführender Heizkessel nach Anspruch 1, bei welchem die Außenwand (10a, 11a, 12a, 20a, 21a) und die Innenwand (10b, 11 b, 12b, 20b, 21 b) eine Wandstärke haben, die kleiner als 5 mm ist und insbesondere kleiner als 2 mm ist.

3. Wasserführender Heizkessel nach einem der vorhergehenden Ansprüche, bei welchem die Innenwand (10b, 11b, 12b, 20b, 21 b) Edelstahl aufweist und die Außenwand (10a, 11a, 12a, 20a, 21a) Stahl aufweist.

4. Wasserführender Heizkessel nach einem der vorhergehenden Ansprüche, bei welchem das Verstärkungselement (14a-e) zwei gegenüberliegende ebene Abschnitte (23, 24) aufweist, die sich jeweils an einer Innenseite der Außenwand (10a, 11a, 12a, 20a, 21 a) bzw. der Innenwand (10b, 11b, 12b, 20b, 21 b) erstrecken und an denen das Verstärkungselement wenigstes teilweise mittels Laserschweißen von Außen durch die Außenwand (10a, 11a, 12a, 20a, 21a) bzw. die Innenwand (10b, 11b, 12b, 20b, 21 b) verschweißt sind.

5. Wasserführender Heizkessel nach Anspruch 4, bei welchem das Verstärkungselement (14a-e) ein Z-förmiges Profil aufweist.

6. Wasserführender Heizkessel nach einem der vorhergehenden Ansprüche, wobei der Heizkessel wenigstens zwei Wandabschnitte (10, 11, 12, 20, 21) aufweist, die kommunizierend miteinander verbunden sind, sodass Wasser von dem einen zu dem anderen Wandabschnitt (10, 11, 12, 20, 21) fließen kann.

7. Wasserführender Heizkessel nach Anspruch 5, bei welchem die wenigstens zwei Wandabschnitte (10, 11, 12, 20, 21) rechtwinklig zueinander angeordnet sind, wobei jeweils die Innenwände (10b, 11b, 12b, 20b, 21b) in einem rechten Winkel aneinander stoßen und an dem Stoß miteinander verschweißt sind.

8. Wasserführender Heizkessel nach Anspruch 5, bei welchem die Außenwände , (10a, 11a, 12a, 20a, 21a) der rechtwinklig miteinander verbundenen Wandabschnitte (10, 11, 12, 20, 21) einstückig ausgebildet sind und der Verbindungsbereich (15a-g) der Außenwände (10a, 11a, 12a, 20a, 21a) der rechtwinklig miteinander verbundenen Wandabschnitte (10, 11, 12, 20, 21) zwei Winkel mit jeweils ungefähr 135 Grad aufweist und dadurch insgesamt ein Winkel von ungefähr 90 Grad zwischen den beiden Außenwänden (10a, 11a, 12a, 20a, 21a) vorhanden.

9. Wasserführender Heizkessel nach einem der vorhergehenden Ansprüche, bei welchem das Verbindungselement (14a-e) einstückig ausgebildet ist.

10. Wasserführender Heizkessel nach einem der vorhergehenden Ansprüche, wobei der Heizkessel eine wasserführende Trennwand (13) im Feuerraum (2) aufweist, die zwei gegenüberliegende Außenwände (13a, 13b) aufweist, zwischen denen wenigstens ein Verstärkungselement (14f) angeordnet ist, wobei die wasserführende Trennwand (13) kommunizierend mit dem wenigstens einen wasserführenden Wandabschnitt (10, 11, 12, 20, 21) verbunden ist.

11. Pufferspeicher zum Speichern von Wasser, wobei der Pufferspeicher dazu eingerichtet ist, in einem Heizsystem zur Speicherung von Warmwasser angeordnet zu werden, umfassend:
wenigstens zwei gegenüberliegende Wandabschnitte (51, 52) zwischen denen wenigstens ein Verstärkungselement (57) angeordnet ist, das mehrere Durchbrechungen (60) aufweist, durch die Wasser strömen kann, wobei
das wenigstens eine Verstärkungselement (57) mittels Laserschweißen von außen durch die gegenüberliegenden Wandabschnitte (51, 52) hindurch mit jeweils der Innenseite des entsprechenden Wandabschnitts (51, 52) wenigstens teilweise verschweißt ist.

12. Pufferspeicher nach Anspruch 11, bei welchem das wenigstens eine Verstärkungselement (57) zwei gegenüberliegende Abschnitte (58, 59), die jeweils an einer Innenseite eines Wandabschnitts (51, 52) verschweißt sind, und mehrere Verbindungselemente (62) aufweist, die die gegenüberliegenden Abschnitte (58, 59) miteinander verbinden.

13. Pufferspeicher nach Anspruch 11 oder 12, bei welchem die Wandabschnitte (51, 52) Edelstahl aufweisen.

14. Pufferspeicher nach einem der Ansprüche 11 bis 13, wobei der Pufferspeicher 300, 500, 750 oder 1000 Liter Fassungsvermögen für das zu speichernde Wasser hat.

15. Pufferspeicher nach einem der Ansprüche 11 bis 14, wobei der Pufferspeicher Außenmaße von 1 m in der Breite, 15 cm in der Tiefe und 2 m in der Höhe bis zu 1,5 m in der Breite, 33 cm in der Tiefe und 2 m in der Höhe aufweist.

16. Verfahren zum Herstellen eines wasserführenden Wandelements (70), insbesondere eines Wandelementes für einen Heizkessel nach einem der Ansprüche 1 bis 10 bzw. einen Pufferspeicher nach einem der Ansprüche 11 bis 15, wobei das Wandelement wenigstens zwei gegenüberliegende Außenwandelemente (64, 65) aufweist, wobei das Verfahren die Schritte umfasst:
Anordnen wenigstens eines Außenwandelements (64, 65);
Anordnen wenigstens eines Verstärkungselements (66) auf der Innenseite (71) des Außenwandelement (64); und
Laserschweißen durch die Außenseite des Außenwandelements (64, 65) hindurch, um das Verstärkungselement (66) mit der Innenseite (71) des Außenwandelements (64) zu verschweißen.

17. Verfahren nach Anspruch 16, wobei das Laserschweißen derart ausgeführt wird, dass eine kontinuierliche Schweißnaht entsteht.

18. Verfahren nach einem der Ansprüche 16 oder 17, weiter die Schritte umfassend:
Formen eines rechtwinkligen Wandelements (70), indem zwei benachbarte Außenwandelemente (64a, 64b) rechtwinklig aneinander gelegt und an der Stoßstelle (73) verschweißt werden und ein gegenüberliegendes Außenwandelement (65) an zwei hintereinander liegenden und beabstandeten Stellen (74, 75) jeweils mit einem Winkel von ungefähr 135 Grad geformt wird.
